# EUROPÄISCHE PATENTSCHRIFT

(11) **EP 0 708 919 B1**
(45) Veröffentlichungstag und Bekanntmachung des Hinweises auf die Patenterteilung: **16.09.1998**
(21) Anmeldenummer: 94922255.8
(22) Anmeldetag: 04.07.1994
(51) Int. Cl.: G01N 30/48, B01D 15/08, B01J 20/32

(54) **TRENNMATERIALIEN FÜR DIE HYDROPHOBE CHROMATOGRAPHIE**
STATIONARY PHASES FOR USE IN HYDROPHOBIC INTERACTION CHROMATOGRAPHY
MATERIAUX DE SEPARATION POUR LA CHROMATOGRAPHIE HYDROPHOBE

(30) Priorität: 16.07.1993 DE 4323913
(43) Veröffentlichungstag der Anmeldung: 01.05.1996
(73) Patentinhaber: MERCK PATENT GmbH, 64293 Darmstadt (DE)
(72) Erfinder: MÜLLER, Egbert, D-64390 Erzhausen (DE)
(86) Internationale Anmeldenummer: EP9402182
(87) Internationale Veröffentlichungsnummer: WO9502820

(56) Entgegenhaltungen:
- DE-A- 1 814 598
- SE-B- 468 814
- US-A- 4 332 694
- DATABASE WPI Week 8801, Derwent Publications Ltd., London, GB; AN 88-003659 & JP,A,62 267 663 (SHOWA DENKO) 20. November 1987

## Beschreibung

Die Erfindung betrifft Trennmaterialien für die hydrophobe Chromatographie.

Für die Flüssigkeitschromatographie auf der Grundlage von hydrophoben Wechselwirkungen sind zwei Gruppen von Trennmaterialien gebräuchlich:
a) Trennmaterialien für die Umkehrphasenchromatographie (reversed phase chromatography, RP-Chromatography), die eine hohe Ligandendichte aufweisen, werden hauptsächlich zur Trennung niedermolekularer Substanzen in nicht-wäßrigen Eluenten verwendet.
b) Trennmaterialien für die hydrophobe Interaktionschromatographie (HIC), die geringere Ligandendichten aufweisen, und die im allgemeinen Liganden mit geringerer Hydrophobizität (z.B. C₄-Alkyl oder C₇-Aryl, statt C₈- oder C₁₈-Alkyl bei der RP-Chromatographie) aufweisen, werden hauptsächlich zur Trennung von Proteinen mit wäßrigen Eluenten benutzt. Dem Starteluenten wird ein chaotropes Salz, beispielsweise 2 M Ammoniumsulfat, zugesetzt; im Verlauf des Gradienten wird die Salzkonzentration verringert.

Trennmaterialien für die hydrophobe Interaktionschromatographie sind im Stand der Technik bekannt. Als Basisträger sind Polysaccharide, die auch vemetzt sein können, sowie vemetzte Poly(meth)acrylate gebräuchlich. In jedem Fall sind die Basisträger mit niedrig Alkyl- oder Arylresten, beispielsweise mit Butyl, Phenyl oder Benzyl, substituiert. Ein bekanntes Herstellverfahren für diese Materialien beruht auf der Umsetzung eines Basisträgers, der Oxirangruppen enthält, mit einem Alkohol in Gegenwart von Bortrifluoridetherat.

Bei der Verwendung der aus dem Stand der Technik bekannten Trennmaterialien beobachtet man häufig eine unzureichende Trennwirkung. Weitere häufig beobachtete Nachteile dieser Materialien sind Verringerung der biologischen Aktivität undloder Verluste durch unspezifische irreversible Bindung des Analyten. Aufgabe der vorliegenden Erfindung ist es,

Trennmaterialien mit verbesserten Eigenschaften insbesondere für die hydrophobe Interaktionschromatographie bereitzustellen.

Aus der Anmeldung DE 43 10 964 sind oxiranhaltige aktivierte Trägermaterialien bekannt, bei denen Monomere der Formel I auf einen hydroxylgruppenhaltigen Basisträger aufgepfropft sind, 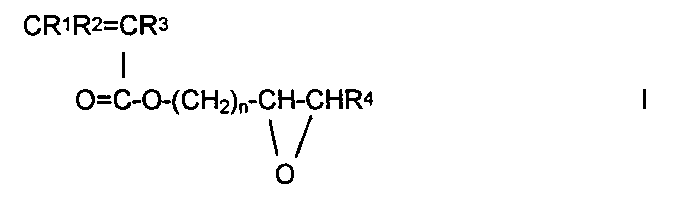 worin
- R¹, R² und R³: unabhängig voneinander H oder CH₃,
- R⁴: H, C₁-C₅-Alkyl oder C₆-C₁₂-Aryl
und
- n: eine ganze Zahl zwischen 1 und 5
bedeuten.

Es wurde gefunden, daß sich diese aktivierten Trägermaterialien in an sich bekannter Weise zu Trennmaterialien für die hydrophobe Interaktionschromatographie umsetzen lassen. Die resultierenden Trennmaterialien weisen verbesserte Eigenschaften auf.

Gegenstand der Erfindung sind somit Trennmaterialien für die hydrophobe Chromatographie auf der Grundlage von hydroxylgruppenhaltigen Basisträgern, auf deren Oberflächen Polymere kovalent gebunden sind, dadurch gekennzeichnet, daß
a) der Basisträger aliphatische Hydroxylgruppen enthält,
b) die kovalentgebundenen Polymeren über eine endständige Monomereinheit an den Basisträger gebunden sind,
c) die Polymeren Monomereinheiten der Formel II enthalten,
d) die Monomereinheiten linear verknüpft sind, 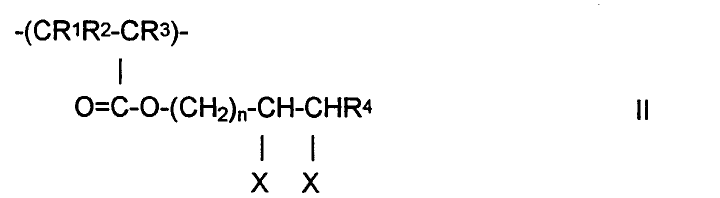
worin
- R¹, R² und R³: unabhängig voneinander
H oder CH₃,
- R⁴: H, C₁-C₅-Alkyl oder C₆-C₁₂-Aryl,
- n: eine ganze Zahl zwischen 1 und 5,
ein Rest X OH und der andere Rest X Z-R⁵,
- Z: O oder NH
und
- R⁵: C₁-C₂₀-Alkyl, C₆-C₂₅-Aryl, C₇-C₂₅-Alkylaryl oder C₇-C₂₅-Arylalkyl, die auch einfach oder mehrfach mit Nitril oder C₁-C₅-Alkoxy derivatisiert sein können, wobei auch eine oder mehrere nicht benachbarte CH₂-Gruppen durch NH oder O oder auch eine oder mehrere CH-Gruppen durch N ersetzt sein können,
oder
- R⁵: -[(CH₂)ₘ-O-]ₒ-R⁶
worin
- m: 2 oder 3,
- o: eine ganze Zahl zwischen 1 und 200
und
- R⁶: H oder C₁-C₅-Alkyl
bedeuten.

Gegenstand der Erfindung ist die Verwendung der erfindungsgemäßen Trennmaterialien für die hydrophobe Interaktionschromatographie bei der Trennung von Gemischen mindestens zweier Substanzen, insbesondere zur Trennung von Proteinen.

Gegenstand der Erfindung sind Verfahren zur Herstellung von Trennmaterialien für die hydrophobe Interaktionschromatographie, dadurch gekennzeichnet, daß aus DE 43 10 964 bekannte oxiranhaltige aktivierte Trägermaterialien mit Alkoholen oder Phenolen der Formel III

R⁵-OH III

oder mit Aminen der Formel IV

R⁵-NH₂ IV

umgesetzt werden, worin R⁵ die oben genannten Bedeutungen besitzt. Die Umsetzung mit Alkoholen wird bevorzugterweise in Gegenwart von Bortrifluoridetherat ausgeführt.

Gegenstand der Erfindung sind Verfahren zur Trennung von Gemischen mindestens zweier Substanzen, insbesondere zur Trennung von Proteinen, mittels hydrophober Interaktionschromatographie unter Verwendung der erfindungsgemäßen Trennmaterialien.

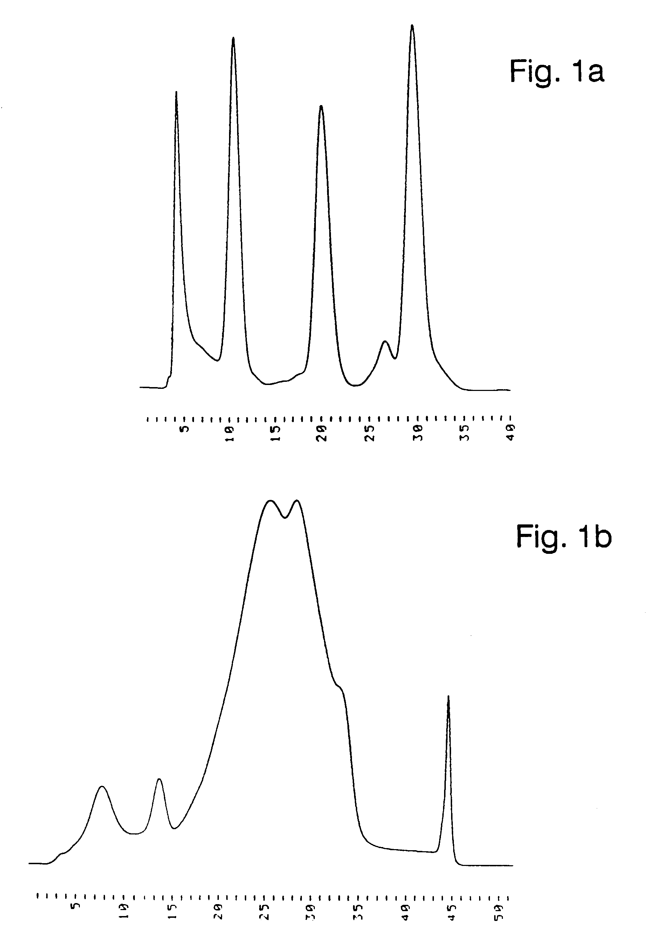

In Abbildung 1a ist eine Trennung der Proteine Cytochrom C, Myoglobin, Lysozym und Chymotrypsinogen an einem erfindungsgemäßen Trennmaterial dargestellt; Abbildung 1b zeigt zum Vergleich eine Trennung derselben Mischung an einem aus dem Stand der Technik bekannten Material.

Die hydrophoben Alkyl- oder Arylreste R⁵ liegen als Substituenten von Poly(meth)acrylaten vor, die auf einem hydroxylgruppenhaltigen Basisträger aufgepfropft sind. Dabei bedeuten die Reste R⁵ die dem Fachmann für den Zweck der hydrophoben Chromatographie (d.h. der RP-Chromatographie und insbesondere der hydrophoben Interaktionschromatographie) bekannten hydrophoben Substituenten, dazu gehören C₁-C₂₀-Alkyl, C₆-C₂₅-Aryl, C₇-C₂5-Alkylaryl oder C₇-C₂₅-Arylalkyl, die auch einfach oder mehrfach mit Nitril oder C₁-C₅-Alkoxy derivatisiert sein können, wobei auch eine oder mehrere nicht benachbarte CH₂-Gruppen durch NH oder O oder auch eine oder mehrere CH-Gruppen durch N ersetzt sein können, oder Polyethoxy- oder Polypropoxyderivate. Für die hydrophobe Interaktionschromatographie werden die Reste C₂-C₅-Alkyl wie z.B. Ethyl, Propyl, n-Butyl, n-Pentyl oder auch verzweigte Reste wie z.B. i-Butyl, t-Butyl, i-Amyl, Neopentyl, sowie C₆-C₁₄-Aryl, wie z.B. Phenyl, Naphthyl, Anthracyl, Phenanthryl, oder auch C₇-C₁₀-Alkylaryl oder C₇-C₁₀-Arylalkyl, wie z.B. Benzyl, bevorzugt.

Diese Reste werden in einer polymeranalogen Umsetzung eingeführt, indem man die entsprechenden Alkohole R₅-OH in Gegenwart von Bortrifluoretherat mit Oxiranen umsetzt. Bei der polymeranalogen Umsetzung dient ein oxiranhaltiges Polymerisat, das auf einen hydroxylgruppenhaltigen Basisträger aufgepfropft ist, als Oxirankomponente. Phenole R⁵-OH und Amine R⁵-NH₂ werden in Gegenwart von Natronlauge zur Reaktion mit der Oxirankomponente gebracht. Die Reaktionspartner können auch vertauscht werden: In diesem Fall wird ein hydroxylgruppenhaltiger Träger mit einem Oxiranderivat, wie z.B. 2,3-Epoxypropylphenylether, in Gegenwart von Bortrifluoretherat umgesetzt.

Der Grad der Hydrophobizität läßt sich durch die Wahl des Substituenten R⁵, sowie durch den Substitutionsgrad beeinflussen. Überschüssige Oxirangruppen lassen sich in bekannter Weise durch Behandeln mit verdünnter Schwefelsäure entfernen.

Auch ohne weitere Ausführungen wird davon ausgegangen, daß ein Fachmann die obige Beschreibung in weitesten Umfang nutzen kann. Die bevorzugten Ausführungsformen sind deswegen lediglich als beschreibende, keineswegs als in irgendeine Weise limitierende Offenbarung aufzufassen.

Die vollständige Offenbarung aller vor- und nachstehend aufgeführten Anmeldungen, Patente und Veröffentlichungen, sowie der korrespondierenden Anmeldung DE 43 23 913, eingereicht am 16. Juli 1993, sind durch Bezugnahme in diese Anmeldung eingeführt.

### Beispiele

### Beispiel 1: Herstellung eines oxiran-aktivierten Trägers ausgehend von Fractogel®-TSK HW 65 (S)

Zu einer Suspension aus 50 ml sedimentiertem Fractogel®-TSK HW 65 (S) und 25 ml Wasser werden mit 2 g Ammoniumcer(lV)nitrat (gelöst in 25 ml 2 M HNO₃) bei Raumtemperatur unter starkem Rühren vermischt. Nach 1 Minute erfolgt die Zugabe einer Lösung von 3 g (2,3-Epoxypropyl)-methacrylat in 30 ml Dioxan. Es wird 3 Stunden weitergerührt.

Anschließend wird die Reaktionssuspension erst mit destilliertem Wasser und dann mit 0,05 M EDTA-Lösung gewaschen.

### Beispiel 2: Synthese eines n-butyl-substituierten Trägermaterials

50 g getrocknete Gel hergestellt nach Beispiel 1 werden in 250 ml 1,4-Dioxan suspendiert und 50 ml 1-Butanol zugegeben. Anschließend werden 30 ml Bortrifluorid-Ethyletherkomplex zugegeben und die Lösung eine Stunde bei Raumtemperatur gerührt. Danach wird das Reaktionsprodukt abgesaugt und mit Aceton und Wasser gewaschen.

### Beispiel 3: Synthese eines benzyl-substituierten Trägermaterials

Entsprechend der Vorschrift nach Beispiel 2 wird ein benzyl-substituiertes Trägermaterial hergestellt, indem anstelle von 1-Butanol Benzylalkohol eingesetzt wird.

### Beispiel 4: Synthese eines phenyl-substituierten Trägermaterials

100 ml Fractogel-Epoxytentakelgel werden in einer Lösung aus 0,6 M NaOH und 0,5 M Phenol suspendiert. Die Lösung wird bei 40 °C 12 Stunden gerührt. Anschließend wird das Material abgesaugt und 2 Stunden bei 40 °C in einer 0,5 M Schwefelsäurelösung langsam gerührt. Danach wird mit 0,25 M Phosphatpuffer (pH 7) bis zum Neutralpunkt, anschließend mit Wasser gewaschen.

### Beispiel 5: Variante für eine Synthese eines phenyl-substituierten Trägermaterials

25 ml oxiranhaltiges Gel, hergestellt nach Beispiel 1, werden mit 100 ml 0,5 M Schwefelsäure 2 Stunden bei 40 °C behandelt, wobei das Diolderivat entsteht. Dieses wird mehrfach mit Dioxan gewaschen und in 25 ml getrocknetem Dioxan suspendiert. Man überführt in einen 100 ml Erlenmeyerkolben mit Trockenrohr und pipettiert 3 ml BF₃-Etherat und anschließend 10 ml 2,3-Epoxypropylphenylether dazu und schüttelt 45 min bei Raumtemperatur. Das Produkt wird dreimal mit Dioxan und anschließend mit Wasser gewaschen.

### Beispiel 6: Synthese eines (aminobutyl)-substituierten Trägermaterials

Zu 50 ml eines nach Beispiel 1 hergestellten Geles werden 100 ml einer wässrigen Lösung aus 0,2 M n-Butylamin und 0,2 M Natriumkarbonatpuffer (pH = 11) zugegeben. Die Lösung wird 24 Stunden bei 40 °C gerührt. Anschließend wird das Material abgesaugt und 2 Stunden bei 40 °C in einer 0,5 M Schwefelsäurelösung langsam gerührt. Danach wird mit 0,25 M Phosphatpuffer (pH 7) bis zum Neutralpunkt, anschließend mit Wasser gewaschen.

### Beispiel 7: Synthese eines mit Polyethylenglykol substituierten Trägermaterials

Zu 50 ml eines nach Beispiel 1 hergestellten Geles werden 100 ml einer wässrigen Lösung aus 20 g Polyethylenglykol (PEG 6000) und 0,3 M Natriumkarbonatpuffer (pH = 13) gegeben. Die Suspension wird 24 Stunden bei 40 °C gerührt. Anschließend wird das Material abgesaugt und 2 Stunden bei 40 °C in einer 0,5 M Schwefelsäurelösung langsam gerührt. Danach wird mit 0,25 M Phosphatpuffer (pH 7) bis zum Neutralpunkt, anschließend mit Wasser gewaschen.

### Anwendungsbeispiel A: Trennung von Proteinen an einem n-butyl-substituierten Trägermaterial

Trägermaterial, hergestellt nach Beispiel 2, wird in eine SuperFormance® Glassäule (50 x 10 mm) gefüllt und mit dem Auftragepuffer (1,8 M (NH₄)₂SO₄ in 20 mM Natriumphosphatpuffer, pH 7,0) äquilibriert. Eine Mischung enthaltend Cytochrom, Myoglobin, Lysozym und Chymotrypsinogen (je 4 mg/ml) wird aufgetragen (200 µl). Eluiert wird bei einem Fluß von 1 ml/min mit einem Gradienten von 1,8 M bis 0 M (NH₄)₂SO₄ in 20 mM Natriumphosphatpuffer, pH 7,0 (Dauer 30 Minuten). Das Elutionsdiagramm wird durch Photometrie bei 280 nm gemessen.

Die vier Proteine werden vollständig getrennt (siehe Abbildung 1a).

### Anwendungsbeispiel B: Trennung von Proteinen an einem benzyl-substituierten Trägermaterial

Trägermaterial, hergestellt nach Beispiel 3, wird in eine SuperFormance® Glassäule (50 x 10 mm) gefüllt. Probe und Chromatographiebedingungen sind dieselben wie in Anwendungsbeispiel A beschrieben.

Auch bei diesem Material werden die vier Proteine vollständig getrennt; das Elutionsdiagramm ähnelt dem von Anwendungsbeispiel A.

### Vergleichsbeispiel C: Trennung von Proteinen an einem n-butyl-substituierten Trägermaterial aus dem Stand der Technik

Kommerziell erhältliches Trägermaterial (n-butylsubstituiertes vernetztes Polymethacrylat) wird in eine SuperFormance® Glassäule (50 x 10 mm) gefüllt. Probe und Chromatographiebedingungen sind dieselben wie in Anwendungsbeispiel A beschrieben.

Im Gegensatz zu dem Anwendungsbeispiel A werden die vier Proteine nicht vollständig getrennt; siehe Abbildung 1b.

Da die in Anwendungsbeispiel A und Vergleichsbeispiel C benutzten Trennmaterialien einen sehr ähnlichen Basisträger (vernetztes Polymethacrylat) besitzen, ist diese Wirkung überraschend.

### Vergleichsbeispiel D: Trennung von Proteinen an einem benzyl-substituierten Trägermaterial aus dem Stand der Technik

Kommerziell erhältliches Trägermaterial (benzylsubstituierte vemetzte Agarose) wird in eine SuperFormance® Glassäule (50 x 10 mm) gefüllt. Probe und Chromatographiebedingungen sind dieselben wie in Anwendungsbeispiel A beschrieben.

Im Gegensatz zu dem Anwendungsbeispiel B werden die vier Proteine nicht vollständig getrennt.

## Patentansprüche

1. Trennmaterialien für die hydrophobe Chromatographie auf der Grundlage von hydroxylgruppenhaltigen Basisträgern, auf deren Oberflächen Polymere kovalent gebunden sind, wobei
a) der Basisträger aliphatische Hydroxylgruppen enthält,
b) die kovalentgebundenen Polymeren über eine endständige Monomereinheit an den Basisträger gebunden sind,
c) die Polymeren Monomereinheiten der Formel II enthalten,
d) die Monomereinheiten linear verknüpft sind, 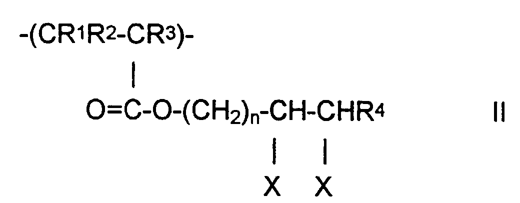
worin
R¹, R² und R³ unabhängig voneinander
H oder CH₃,
R⁴ H, C₁-C₅-Alkyl oder C₆-C₁₂-Aryl,
n eine ganze Zahl zwischen 1 und 5,
ein Rest X OH und der andere Rest X Z-R⁵,
Z O oder NH
und
R⁵ C₁-C₂₀-Alkyl, C₆-C₂₅-Aryl, C₇-C₂₅-Alkylaryl oder C₇-C₂₅-Arylalkyl, die auch einfach oder mehrfach mit Nitril oder C₁-C₅-Alkoxy derivatisiert sein können, wobei auch eine oder mehrere nicht benachbarte CH₂-Gruppen durch NH oder O oder auch eine oder mehrere CH-Gruppen durch N ersetzt sein können,
oder
R⁵ -[(CH₂)ₘ-O-]ₒ-R⁶
worin
m 2 oder 3,
o eine ganze Zahl zwischen 1 und 200
und
R⁶ H oder C₁-C₅-Alkyl
bedeuten.

2. Verwendung von Trennmaterialien mit den Merkmalen des Anspruches 1 für die chromatographische Trennung von Gemischen mindestens zweier Substanzen.

3. Verfahren zur Herstellung von Trennmaterialien für die hydrophobe Interaktionschromatographie, dadurch gekennzeichnet, daß aktivierte Trägermaterialien, die aus einem hydroxylgruppenhaltigen Basisträger bestehen, auf den oxiranderivatisierte Poly(meth)acrylate aufgepfropft sind, mit Alkoholen oder Phenolen der Formel III
R⁵-OH III
oder mit Aminen der Formel IV
R⁵-NH₂ IV
umgesetzt werden, worin R⁵ die in Anspruch 1 genannten Bedeutungen besitzt.

4. Verfahren zur chromatographischen Trennung von Gemischen mindestens zweier Substanzen unter Verwendung von Trennmaterialien nach Anspruch 1.

## Claims

1. Separating materials for hydrophobic chromatography based on hydroxyl group-containing basal supports on whose surfaces polymers are covalently bonded, wherein
a) the basal support contains aliphatic hydroxyl groups,
b) the covalently bonded polymers are bonded to the basal support by way of a terminal monomer unit,
c) the polymers contain monomer units of the formula II,
d) the monomer units are linked linearly, 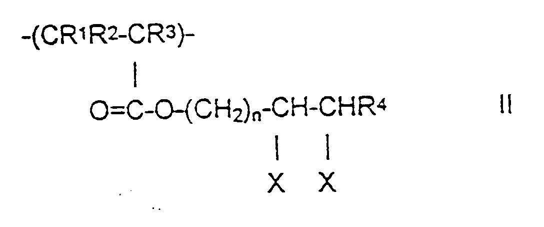
in which
R¹, R² and R³ are, independently of each other,
H or CH₃,
R⁴ is H, C₁-C₅-alkyl or C₆-C₁₂-aryl,
n is an integer between 1 and 5,
one X radical is OH and the other X radical is Z-R⁵,
Z is O or NH,
and
R⁵ is C₁-C₂₀-alkyl, C₆-C₂₅-aryl, C₇-C₂₅-alkylaryl or C₇-C₂₅-arylalkyl which can also be derivatized, once or more than once, with nitrile or C₁-C₅-alkoxy, where one or more non-adjacent CH₂ groups can also be replaced by NH or O or else one or more CH groups can be replaced by N, or
R⁵ is -[(CH₂)ₘ-O-]ₒ-R⁶
in which
m is 2 or 3,
o is an integer between 1 and 200
and
R⁶ is H or C₁-C₅-alkyl.

2. Use of separating materials having the features of Claim 1 for the chromatographic separation of mixtures of at least two substances.

3. Process for preparing separating materials for hydrophobic interaction chromatography, characterized in that activated support materials, which consist of a hydroxyl group-containing basal support onto which oxirane-derivatized poly(meth)acrylates are grafted, are reacted with alcohols or phenols of the formula III
R⁵-OH III
or with amines of the formula IV
R⁵-NH₂ IV
in which R⁵ has the meanings given in Claim 1.

4. Process for the chromatographic separation of mixtures of at least two substances using separating materials according to Claim 1.

## Revendications

1. Matériaux de séparation pour la chromatographie hydrophobe sur la base de supports de base contenant des groupes hydroxyles, sur les surfaces desquels sont liés de façon covalente des polymères,
(a) le support de base contenant des groupes hydroxyles aliphatiques,
(b) les polymères liés de façon covalente étant liés au support de base par une unité de monomère terminale,
(c) les polymères contenant des unités de monomères de formule II,
(d) les unités de monomères étant reliées de façon linéaire, 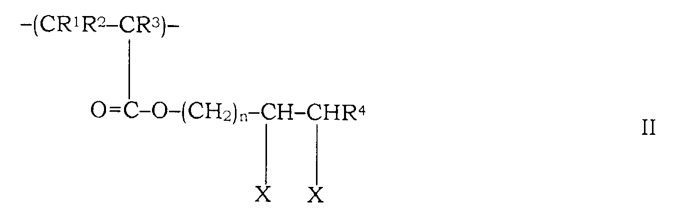
dans laquelle
R¹, R² et R³ représentent, indépendamment les uns des autres, H ou CH₃,
R⁴ représente H, un alkyle en C₁-C₅ ou un aryle en C₆-C₁₂,
n est un nombre entier compris entre 1 et 5,
l'un des restes X représente OH et l'autre reste X représentant Z-R⁵ Z représentant O ou NH,
et
R⁵ représentant un alkyle en C₁-C₂₀, un aryle en C₆-C₂₅, un alkylaryle en C₇-C₂₅ ou un arylalkyle en C₇-C₂₅ pouvant être également mono- ou polysubstitués par un nitrile ou par un alcoxy en C₁-C₅, un ou plusieurs groupes CH₂ non adjacents pouvant être également remplacés par NH ou O ou un ou plusieurs groupes CH pouvant être également remplacés par N,
ou
R⁵ représentant -[(CH₂)ₘ-O-]ₒ-R⁶
m étant égal à 2 ou 3,
o étant un nombre entier compris entre 1 et 200, et
R⁶ représentant H ou un alkyle en C₁-C₅.

2. Utilisation des matériaux de séparation présentant les caractéristiques indiquées dans la revendication 1 pour la séparation chromatographique de mélanges d'au moins deux substances.

3. Procédé pour la préparation de matériaux de séparation pour la chromatographie d'interaction hydrophobe, caractérisé en ce que des supports activés, constitués d'un support de base contenant des groupes hydroxyles, sur lequel sont greffés des poly-(méth)-acrylates substitués par des oxiranes, sont mis à réagir avec des alcools ou des phénols de formule III:
R⁵-OH III
ou avec des amines de formule IV
R⁵-NH₂ IV
R⁵ ayant les significations données dans la revendication 1.

4. Procédé de séparation chromatographique de mélange d'au moins deux substances faisant utilisation des matériaux de séparation selon la revendication 1.
